(19) Europäisches Patentamt
European Patent Office
Office européen des brevets

(11) **EP 2 463 328 A2**

(12) **EUROPEAN PATENT APPLICATION**

(43) Date of publication:
**13.06.2012 Bulletin 2012/24**

(51) Int Cl.:
*C08J 5/18* (2006.01)        *A01G 9/14* (2006.01)
*A01G 13/02* (2006.01)

(21) Application number: **11190146.8**

(22) Date of filing: **22.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.12.2010 KR 20100125565**

(71) Applicant: **Phyto World Co., Ltd.**
**Damyang-gun, Jeollanam-do 517-803 (KR)**

(72) Inventors:
• **Lee, In Hwa**
  **Gwangju 503-320 (KR)**
• **Hong, Jeong Rae**
  **Gwangju 506-720 (KR)**
• **Choi, Seung Hyun**
  **Gwangju 506-736 (KR)**

(74) Representative: **Office Freylinger**
**P.O. Box 48**
**8001 Strassen (LU)**

(54) **Biodegradable polymer film with controlled degree of biodegradability comprising mixture of polyvinyl alcohol and cellulose polymer and preparation method thereof**

(57)    The invention relates to a biodegradable polymer film with controlled biodegradability comprising a mixture of polyvinyl alcohol and cellulose polymer and a preparation method thereof. By preparing a mixed polymer film comprising PVA and cellulose polymer, tensile strength, biodegradability are increased, degradability is controlled, and since a mixed polymer film comprising PVA and cellulose polymer is degraded after some period, it can be used as mulching film for agriculture and does not have to be collected after use. Since OVA-MC biodegradable polymer film does not remain in a soil for long, it prevents soil contamination and can be used for domestic use, or for vinyl industry or household waste processing industry.

【Fig. 1】

EP 2 463 328 A2

# EP 2 463 328 A2

**Description**

## BACKGROUND OF THE INVENTION

1. Field of the Invention

The invention relates to a biodegradable polymer film with controlled biodegradability comprising a mixture of polyvinyl alcohol and cellulose polymer and a preparation method thereof.

2. Description of the Related Art

Clean environment is at stake all around the world. Many regard the use of plastic packaging to be one of the main causes of environmental problems. In the past, the main goal of the industry or related academic field was to produce synthetic plastics with greater strength and longer service life. However, the focus of academic and industrial studies and developments has now shifted from temporary convenience to more environment-friendly approaches that care about the future of human races and Earth.

One of the main efforts is taken by the movement toward the development and commercialization of biodegradable plastics. Against this backdrop, exponentially-increasing attention is focused on the polyvinyl alcohol (PVA) which is synthetic soluble polymer used worldwide and is environment-friendly.

PVA is the polymer discovered in Germany, 1924, and it was first commercialized after the Second World War in Japan as Vinylon fiber which is an insoluble fiber with practical use. Because vinyl alcohol is unstable as a monomer due to tautomerization, polymerization is impossible. Accordingly, an indirect way is used in consideration of such instability of the monomer, in which vinyl acetate in stable form is prepared and undergoes radical-polymerization into polyvinyl acetate (PVAc), and is hydrolyzed into alkali with saponification (I. Sakurada, Marcel Dekker, N.Y., 1985; C.A. Finch, John Wiley & Sons, N. Y., 1992).

PVA is white rubbery polymer in powder form which has linear crystallinity with flexible molecular chain, and is nontoxic, biocompatible and biodegradable, easily formed into films or fibers, and which provides high degrees of dynamic properties including surface activity, tensile strength, compressive strength, tensile modulus, abrasion resistance, or flexibility, and also provides good solubility and chemical reaction. Additionally, PVA has good alkali resistance, solvent resistance, oil resistance, oxygen barrier, chemical resistance, and since PVA includes hydroxyl group, it is known to have superior miscibility in blending compared to other polymers. Therefore, PVA can be used in a variety of applications as an ideal polymer for high performance industrial materials such as a high elastic modulus organic fiber for asbestos replacement, polarizer film, wrapper, separating filter, adhesive, thickening agent, coating agent, emulsifying agent, suspended stabilizer, concrete and cement intensifier, fishing net for aquaculture; and for medicinal materials such as hydrogel for substituting human organs, drug delivery system (DDS), anticancer drug, biosensor, styptic, bioreactor, or medicinal polymer materials for cancer disease (M. Tsukada, et al., J. Polym. Sci., Part B, Polym. Phys. Ed., 32, 243 1994; C. M. Hassan, et al., J. Appl. Polym. Sci., 76, 2075, 2000; J. H. Kim, et al., J. Appl . Polym. Sci., 44, 1823, 1992*;* T. Chandy, et al.,, J. Appl . Polym. Sci., 44, 2145, 1992*;* Y. Azuma, et al., Polymer, 33, 4763, 1992*;* Breitenbach, A. et al., Polymer, 39, 3261, 1998*;* Koyano T, et al., J. Biomed. Mat. Res., 39, 486, 1996). PVA has recently received increased attention for its solubility and degradability in view of current environmental issues.

PVA is naturally degradable when mixed with food wastes. Additionally, this water-soluble film is expected to be a useful contribution to more efficient disposal and management of wastes for both customers and manufacturers together. However, although PVA film has advantageous characteristics such as environment-friendliness and superior physical properties, PVA film has not been in wide used yet as a wrapper, but used for limited purposes such as inner layer of barrier films or for applications that require solubility. However, studies to develop various materials and complex films have been actively conducted to improve physical properties and lower the prices so that the use of PVA as a wrapper is expected to increase.

Since PVA is not obtainable by polymerization of its monomer, PVA is produced by synthesizing vinyl ester precursors and conducting hydrolysis using alkali or acid. Being linear polymer without branches, PVA shows a considerable difference from the precursor in number average degree of polymerization. Accordingly, generation of branches has to be suppressed as many as possible during synthesis of precursor in order to increase the molecular weight and molecular weight distribution of PVA. PVAc has been used widely as the precursor of PVA and this is obtained by the polymerization of vinyl acetate (VAc). However, since VAc shows far higher growth rate than other types of vinyl monomers, considerably many branches are generated, thus increasing the molecular weight of resultant PVA and also hindering uniform molecular weight distribution. Particularly, when PVA is formed into fibers or films, high degrees of saponification, molecular weight, and stereoregularity are required to ensure that the polymerized PVA have high strength, tensile modulus, hot water resistance, and thermal resistance. PVA exceeding about 4000 number average degree of polymerization is called 'high molecular weight PVA' and PVA exceeding about 10000 number average degree of polymerization is called 'ultrahigh molecular weight PVA'.

PVA can also be categorized according to stereoregularity into syndiotactic PVA having 55% or higher syndiotactic diad content, atactic pVA having 47-54% syndiotactic diad content, and isotactic PVA having 46% or lower syndiotactic diad content. As the syndiotactic diad content increases, the produced PVA fiber or film possesses higher strength and tensile modulus, and increased thermal resistance, humidity resistance, and hot water resistance. Domestically-commercialized PVA generally has the number average degree of polymerization in the range of 500-4000, and it has been accepted that it would be difficult to produce low molecular weight PVA and high molecular weight PVA altogether with the same polymerization. It is generally known that PVA has dynamically-varying properties depending on not only its molecular weight, but also degrees of saponification and syndiotacticity. It is therefore necessary to increase the molecular weight and degrees of saponification and syndiotacticity to maximize the physical properties of PVA (Seok Kyun NOH et al., Kor, J, Polymer Science and Technology. Vol. 15, 4~11, 2004).

Meanwhile, cellulose is another polymer with numerous beta glucose units. Glucosidic linkage is formed as water is removed due to the reaction between OH linked to carbon number 1 constituting beta glucose with OH linked to carbon number 4 of another beta glucose molecule, and cellulose includes numerous beta glucose units as the above reaction repeats. Cellobiose is disaccharide in which two beta glucose molecules are linked to each other. Cellobiose is formed into cellulose as several thousands or several tens of thousands beta glucose molecules continue to bind together in glucosidic bonding. Generally, cellulose is a linear condensation polymer with high crystallinity based on repeated glucose ($C_6H_{10}O_5$) units, and includes firm polymer chain formed by hydrogen bonding between -OH groups existing in each monomer. Due to its way of bonding, cellulose does not dissolve easily in general organic solvents. Accordingly, various derivatives can be obtained by substituting -OH groups with acetylation or etherification. It is also possible to increase the solubility by upgrading -OH groups and thus inhibiting hydrogen bonding. The cellulose derivatives obtainable by the above method includes cellulose nitrate (CN), cellulose acetate (CA), cellulose diacetate (CDA), cellulose propionate (CAP), methyl cellulose (MC), or ethyl cellulose (EC). Among these, methyl cellulose is synthesized by reacting dimethyl sulfate with cellulose in the presence of alkali, and various methyl celluloses with different degrees of substitution can be generated according to the conditions of preparation. Methyl cellulose is generally whitish solid, but the phase can vary to some extents depending on the degree of methylation. Methyl cellulose with degree of substitution in the range of 0.1~0.9 ($OCH_3$ in 2~16%) dissolves in 4~10% sodium hydroxide, methyl cellulose with degree of substitution in the range of 1.6-2.0 ($OCH_3$ in 26.5~32.6%) dissolves in cold water, and methyl cellulose with degree of substitution in the range of 2.4-2.6 ($OCH_3$ in 34~38%) dissolves in organic solvent into sticky solution. Hydrophilic methyl cellulose is generally used in glue, thickener, cosmetics or food, and methyl cellulose soluble in alkali is generally used to solidify the edge of textile, or used for preparation of films (A. Usuki, et. al., J. appl. Polym. Sci., 63, 137, 1997; M. Kato, et. al., J. Appl. Polym. Sci., 66, 1781, 1997; X. Zheng, et. al, Polym. Derad. Stab., 82, 441, 2003).

Compared to naturally-occurring materials such as wood, paper, stone, metal or glass, the plastics (or synthetic resin) are new polymer material which can be chemically obtained. Thanks to superior physical properties, plasticity and durability, plastics are used in a wide range of applications from the industrial use to disposable containers. By way of example, plastics are considered to be one of the most important materials in the agricultural field as these are used for a covering material for vinyl houses, or mulching material to suppress weeds or control humidity. However, most currently-available vinyl materials do not decompose and are semi-permanent. Massive amount of non-decomposable waste vinyl has raised threats to environment in view of environmental hormone irradiated during incineration or landfill, difficulty of selecting appropriate places for landfill, emission of dioxin which is highly toxic, or air pollution due to incomplete combustion, and this has led plastics to be blamed for environmental contamination. Therefore, development and commercialization of environment-friendly and non-toxic decomposable plastic is desperately required to address the problems mentioned above. The ideal plastic needs to have such physical properties to allow use thereof at reasonable cost as the general plastics and with increased safety and convenience, and also to allow easy disposal due to its biodegradability by microorganisms, solar ray, subterranean heat, or composting microorganisms. In developed countries including U.S.A and Japan, it is now mandatory to use biodegradable resin as a material for plastics, containers, or shopping bags, and more studies are actively conducted to adopt the use of biodegradable plastics into practical use and to develop newer materials. The definition of the 'biodegradable plastic' has not been spelled out clearly yet, but the world is discussing actively on this issue. In U.S.A., according to American Society for Testing and Materials (ASTM), plastics are the 'biodegradable plastics' if these undergo considerable changes in chemical structure thereof during a predetermined time period so that such changes are measurable by standardized tests. According to ASTM, the biodegradable plastics are classified into three categories: biodegradable plastics; photo-biodegradable plastics (multi-degradable); and photodegradable plastics. According to ASTM, degradable plastics are plastics which are designed to undergo substantial changes in chemical structure thereof under specific environmental conditions for a predetermined time period so as to lose certain properties which can be characterized by standardized tests, and the biodegradable plastics are decomposable plastics which are decomposed by action of natural microorganisms including bacteria, fungi, or algae. The International Standard Organization (ISO) also defines the ultimate biodegradation as the process in which organic substance breaks down by the action of microorganisms, ultimately generating water and inorganic salt/bio substances. As the above suggests, the degradable plastics can be classified into various categories according to the materials used for production and mechanism of reaction by which the material decomposes, and these categories generally include biodegradable, bio-decomposable and photodegradable plastics. The biodegradable plastics are plastics which are produced by synthesizing new polymer material using bio polymer such as poly-hydroxyl butyric acid, pullulan, or hyaluronic acid, or natural alginate, cellulose, or chitin polymer derived from plants or animals as raw material, and which require no incineration since the plastics completely decompose under ground into water, carbon dioxide, or methane gas within several months or two years by soil microorganisms.

Despite the superior tensile strength, humidity resistance and plasticity, the use of biodegradable plastics is limited since the biodegradable plastics decompose at varying speeds depending on the surrounding conditions and also are generally expensive. Meanwhile, the bio-decomposable plastics are produced by mixing polymer substance such as starch which decomposes naturally with general conventional plastics such as polyethylene, polypropylene, or polystyrene, and adding various additives to accelerate decomposing.

The bio-decomposable plastics are relatively less pricy, but due to lower quality and relatively weaker durability and strength, these plastics are used for limited purposes such as garbage bags. The bio-decomposable plastics also break down incompletely. According to report by Scott *et al.,* the photodegradable plastics are plastics which are decomposed by the steps in which the plastics have polymer rings cut due to ultraviolet ray from the sun, the physical properties of the resin deteriorate as a result, and the molecular weights ultimately decreases. Transition metal ions of iron or nickel and pro-oxidant and sensitizer are added to provide photo-degradability to the polymer rings, and carbonyl group is introduced as sensitizing group to the main ring during polymerization so that photo-decomposing can happen by the ultraviolet ray approximately at 290-315 nm of light energy. Plastics break down gradually at varying absorption wavelengths and speeds according to respective chemical structures thereof, but it is generally known that the ultraviolet ray at 290 nm particularly cuts covalent bond of carbon and hydrogen that constitute the plastics. Although the photodegradable plastics are available at economic price, the current technologies are limited to using the photodegradable plastics only for thin films. In addition, there are some difficulties that hinder the use of the photodegradable plastics, which mainly include the requirement for solar light including ultraviolet rays, which does not allow decomposition of the plastics in landfill condition (e.g., the photodegradable plastics as a mulching covering in agricultural field would have limited decomposition.)

According to report by Albertsson et al., the need for a considerable amount of sensitizer additives to produce photodegradable plastics will result in additional hazards of heavy metal contamination (Albertsson, A. C., et. al., Polymer Deg. and Stabil. 37: 163~168; 1992).

Multi-degradable plastics with characteristics and functions of the three types of degradable plastics mentioned above have recently been developed and made available on the market mainly in developed countries including Canada, U.S.A., and Japan. However, due to high price, the multi-degradable plastics have not been in commercial use in South Korea yet (Lee, S. I., et. al., J. Int. of Industrial Technol., 29: 129-134, 2001).

The multi-degradable mechanism generally occurs in soil and can be divided into three stages. In the first stage, the biodegradable material included in the plastics breaks down, thereby causing the structure of the plastics to change into porous structure with reduced physical strength or tensile modulus and increased surface area. In the second stage, automatic oxidation occurs due to pro-oxidant, leading to chemical decomposition in which molecular weight decreases and atomization progresses. In the final (third) stage, the major decomposition occurs by microorganism or enzyme. In practical application, the above-mentioned stages occur simultaneously and complementarily rather than in sequence.

Accordingly, it is necessary to evaluate comprehensively the use of the multi-degradable plastics for use as the films with controlled degradability in comparison with various other degradable plastics.

The biodegradable wrappers are generally classified into photodegradable wrappers; hydrodegradable wrappers; and biodegradable wrappers according to the source of decomposition. As for the biodegradable wrappers using natural polymers existing abundantly in nature, in history, cellulose plastic product has first been developed (Whitehouse, A.B. Pollution Engineering, May, 71, 1990). The sales of the cellulose plastic product are currently limited to cellophane, slide film, or cellulose nitrate, etc. However, as mentioned above, the degradable wrappers using natural polymer have gained increasing attention as the plastic wrappers pose environmental problems. The biodegradable wrappers using natural polymer are produced using condensation reaction, and thus are easily hydrolyzed (Tao, B.Y., ASAE Paper 906609; 1990). Many studies are underway to develop biodegradable wrappers using natural polymer despite the less competitive price thereof, because the biodegradable wrappers will bring in more advantages such as complete decomposition of the used wrappers which will minimize the environmental contamination, and it is also possible to use the used wrappers for composting and feed.

KR 10-0440742(B1) discloses a biodegradable film and sheet and a preparation method thereof, in which polycaprolactone (PCL) is blended with polyvinylchloride (PVC) and formed into pellets, and the pellets are molded so that the tensile strength improves from that of PVC.

The present inventors have conducted studies on a film of which biodegradability is controllable by content control using methyl cellulose and PVA with different biodegradabilities, and discovered that by mixing cellulose polymer with PVA, it is possible to increase biodegradability and also improve the major shortcoming of the conventional biodegradable cellulose polymer film, i.e., the weak tensile strength, and thus completed the present invention based on the above-mentioned discovery.

## SUMMARY OF THE INVENTION

An object of the present invention is to provide a mixed biodegradable polymer film with controlled biodegradability comprising a mixture of polyvinyl alcohol (PVA) and cellulose polymer.

Another object of the present invention is to provide a method for preparing a mixed biodegradable polymer film with controlled biodegradability.

Yet another object of the present invention is to provide a mulching film for agricultural use which comprises the mixed biodegradable polymer film with controlled biodegradability and thus requires no collection after use thereof.

**BRIEF DESCRIPTION OF THE DRAWINGS**

FIG. 1 is a flow chart illustrating the preparation process of PVA-MC film according to one embodiment of the present invention.

FIG. 2 is a graphical representation of tensile strength of PVC-MC film according to an embodiment of the present invention.

FIG. 3 is a graphical representation of carbon dioxide and biodegradability of PVA-5% MC film according to an embodiment of the present invention.

FIG. 4 is a graphical representation of carbon dioxide and biodegradability of PVA-15% MC film according to an embodiment of the present invention.

FIG. 5 a graphical representation of carbon dioxide and biodegradability of PVA-25% MC film according to an embodiment of the present invention.

FIG. 6 is a graphical representation of carbon dioxide and biodegradability of PVA-50% MC film according to an embodiment of the present invention.

FIG. 7 is images of a field test of PVA-MC film according to an embodiment of the present invention.

FIG. 8 is images of decomposed states of PVA-5% MC film according to time after a field test.

FIG. 9 is images of decomposed states of PVA-15% MC film according to time after a field test.

FIG. 10 is images of decomposed states of PVA-25% MC film according to time after a field test.

FIG. 11 is images of decomposed states of PVA-50% MC film according to time after a field test.

FIG. 12 is scanning electronic microscope (SEM) images of after field test of decomposed states of PVA-5% MC film (landfill) according to time.

FIG. 13 is SEM images of after field test of decomposed states of PVA-15% MC film (landfill) according to time.

FIG. 14 is SEM images of after field test of decomposed states of PVA-25% MC film (landfill) according to time.

FIG. 15 is SEM images of after field test of decomposed states of PVA-50% MC film (landfill) according to time.

FIG. 16 is SEM images of after field test of decomposed states of PVA-5% MC film (mulching) according to time.

FIG. 17 is SEM images of after field test of decomposed states of PVA-15% MC film (mulching) according to time.

FIG. 18 is SEM images of after field test of decomposed states of PVA-25% MC film (mulching) according to time.

FIG. 19 is SEM images of after field test of decomposed states of PVA-50% MC film (mulching) according to time.

## DETAILED DESCRIPTION OF EXEMPLARY EMBODIMENTS

The present invention will be explained in greater detail below.

In one embodiment, a mixed biodegradable polymer film with controlled biodegradability comprising a mixture of polyvinyl alcohol and cellulose polymer is provided.

In polymer films, as the weight of PVA increases, the tensile strength increases but degradation is hindered. If the weight of cellulose polymer increases, biodegradability increases but the tensile strength decreases.

Therefore, according to an embodiment of the present invention, by regulating a mixed ratio of PVA and cellulose polymer, the tensile strength and biodegradability can be regulated appropriately. Preferably, the polyvinyl alcohol is used by 10~90 weight% with respect to the total film weight, and 1~99 weight% of the cellulose polymer is mixed with respect to the weight of polyvinyl alcohol.

More preferably, the polyvinyl alcohol is used by 10~50 weight% with respect to the total film weight, and 5~50 weight% of cellulose polymer is mixed with respect to the weight of polyvinyl alcohol.

The cellulose polymer is one selected from a group consisting of methyl cellulose, ethyl cellulose, carboxyl methyl cellulose, cellulose acetate phthalate and stearyl cellulose. Preferably, the cellulose polymer is methyl cellulose.

Further, an embodiment of the present invention provides a method for preparing a biodegradable polymer film with controlled biodegradability, which includes; dissolving polyvinyl alcohol in water, adding polyethyleneglycol-400 (PEG-400), and adding glyoxal and phosphoric acid into the above mixture (step 1); adding a cellulose polymer dissolved in water to the mixture at step 1 (step 2); preparing a film with the mixture prepared at step 2 on a glass plate (step 3); and drying the film prepared at step 3 (step 4).

At step 1, polyvinyl alcohol is melted, PEG-400 is added, and glyoxal and phosphoric acid are added into the above mixture.

To be specific, 10~90 weight% of polyvinyl alcohol with respect to the total film weight is dissolved in water, stirred, and the PEG-400 is added by 50 weight% or below and stirred at 60~85 °C for 1~3 hours.

In the prepared polyvinyl alcohol mixed solution, the glyoxal is added by 30 weight% or below with respected to PVA and a small amount of phosphorus acid is added as a catalyst to acidify the solution, and the solution is then stirred.

Preferably, the polyvinyl alcohol is used by 10~90 weight%, and more preferably, by 10~50 weight% with respected to the total film weight.

As the weight of polyvinyl alcohol increases, the tensile strength increases.

Also, to add flexibility and plasticity to the prepared film, the PEG-400 is used by weight% or below. Preferably, by 15~20 weight% with respected to the weight of polyvinyl alcohol.

When added in polyvinyl alcohol, glyoxal forms new linkages to increase coherence, and thus adds stronger tension compared to original tensile strength of polyvinyl alcohol. The glyoxal is used by 30 weight% or below, or preferably, by 5~15 weight% with respected to the weight of polyvinyl alcohol, but not limited thereto.

At step 2, the mixture at step 1 is added with cellulose dissolved in water.

To be specific, to the weight of cross-linked polyvinyl alcohol at step 1, 1~99 weight% of methyl cellulose dissolved in water is added and stirred.

Preferably, the cellulose polymer is used by 5~50 weight% with respect to the weight of polyvinyl alcohol.

The cellulose polymer with increased weight has increased biodegradation rate.

The cellulose polymer is one selected from a group consisting of methyl cellulose, ethyl cellulose, carboxyl methyl cellulose, cellulose acetate phthalate and stearyl cellulose, or preferably, the cellulose polymer is methyl cellulose.

At step 3, the mixture at step 2 is formed into a film on glass plate.

To be specific, the mixture of step 2 is poured over the glass plate which have even surface, and thickness of the mixture is regulated with a suitable device.

At step 4, the film prepared at step 3 is dried.

To be specific, the film prepared at step 3 is dried at 55~65 °C for 24 hours to be formed into a PVA-cellulose polymer film, and the drying temperature of the film may desirably be 60 °C.

If the drying temperature is out of the above-mentioned range, the size and the number of air cells of the film vary depending on the speed of drying.

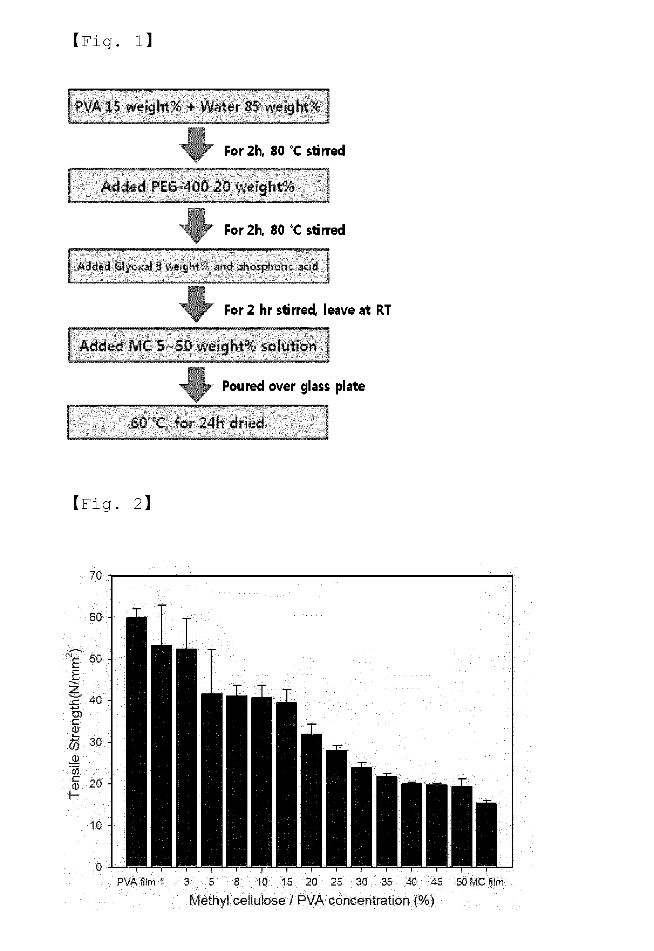

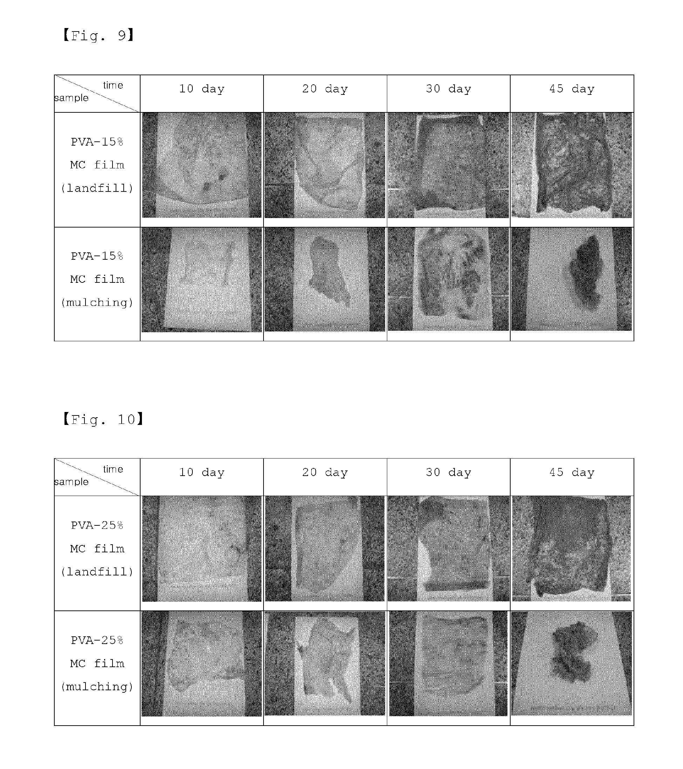

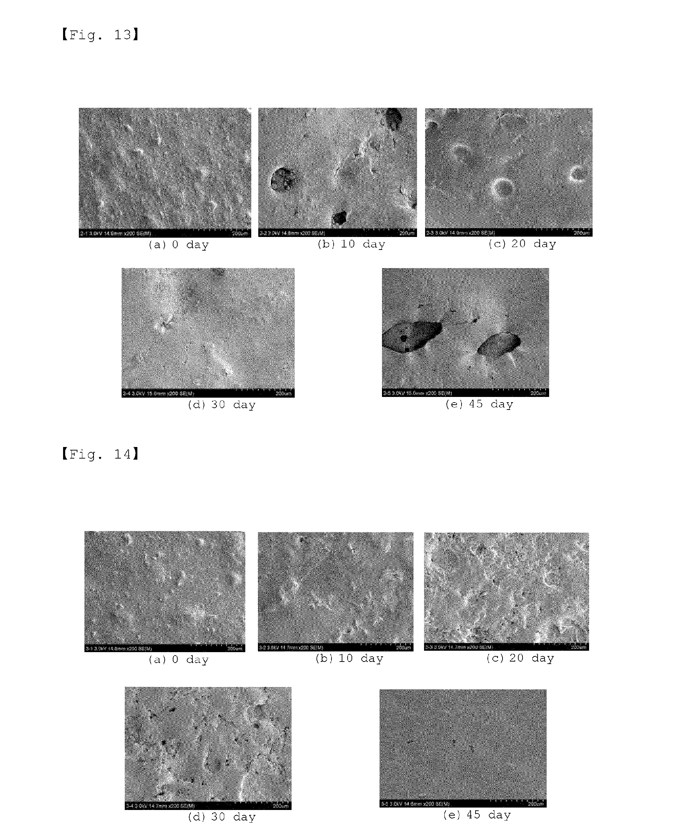

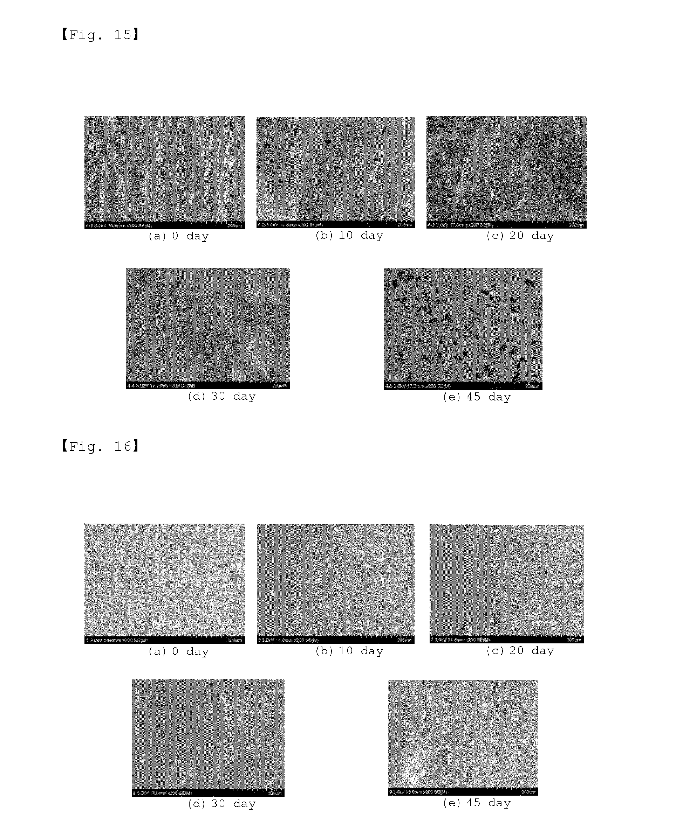

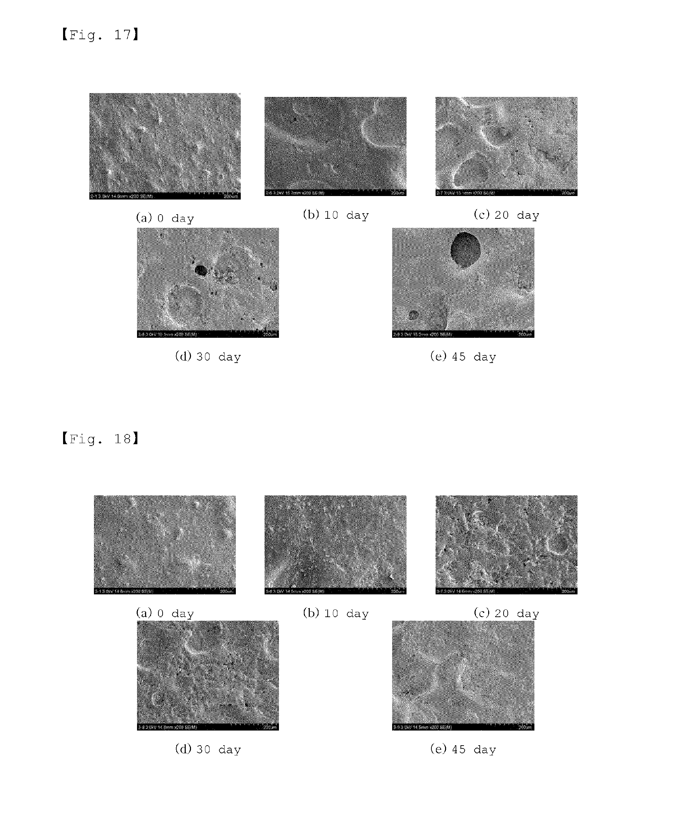

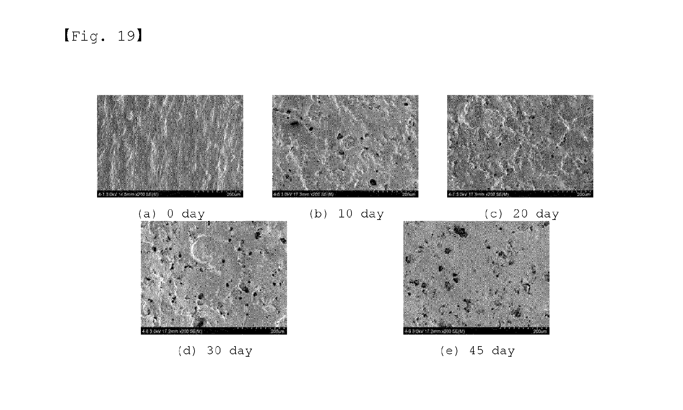

A biodegradable polymer film according to an embodiment of the present invention has higher tensile strength, and similar or greater biodegradability compared to conventional biodegradable films, and degree of degradation thereof is controllable (see Table 1~7 and FIGS. 2-19), and thus can be used effectively for the production of environment-friendly products in a variety of fields including films for use in the agricultural field or at homes, vinyl industry or household waste processing industry.

Also, a biodegradable polymer film with controlled biodegradability comprising a mixture of polyvinyl alcohol and cellulose polymer according to an embodiment of the present invention is added with a plant protection agent.

Accordingly, a step of adding plant protection agent (step A) may be added after step 2 of preparing the PVA-cellulose polymer film.

The plant protection agent is one selected from a group consisting of neem oil, rotenone, poroligenous liquor, nicotine or arsenic acid, or preferably, neem oil or rotenone.

Further, an embodiment of the present invention provides a mulching film for agricultural use including a mixture of biodegradable polymer film with controlled degradability, which does not have to be collected after use.

Since the mulching film for agricultural use does not have to be collected after use and does not remain long on soil, costs for collecting used film is saved and soil contamination is prevented. Therefore, the mulching film according to the embodiment is eco-friendly.

The present inventive technical concept will be explained in greater detail below based on the several examples which are not to be construed as limiting.

<Example 1> Preparation of PVA-5% MC film

Polyvinyl alcohol with degree of polymerization of 1700 and degree of saponification of 98~99.5% was purchased from OCI Company LTD. and used without purification. Polyethyleneglycol-400 (PEG-400) was purchased from YAKURI CHEMICAL for use as a plasticizer. Methyl cellulose 15 centipoise was purchased from Sigma Corporation for use as a cellulose derivative.

Glyoxal (40 weight% solution in water) was purchased from Aldrich Corporation for use as a crosslinking agent for cross-linking PVA and MC film. 400X400nmX5mm size of a conventional glass was used as a film preparation glass plate. To regulate a thickness, YBA-7 device from YOSHIMITSU which can regulate the thickness from 12.5 to 250µm, and device from SHEEN which can regulate the thickness from 0.1 to 10mm were used.

To prepare a polyvinyl alcohol(PVA)-methyl cellulose(MC) film, 15g of polyvinyl alcohol and 0.75g (5 weight%) of methyl cellulose was added with 85g of water respectively to prepare each solution.

Polyvinyl alcohol was stirred at 80 ˚C for 2 hours, and during stirring, 3g of poly ethyleneglycol-400 (PEG-400) was added and then stirred for 2 more hours at 80 ˚C.

In such prepared polyvinyl alcohol solution, 1.2g of glyoxal was added as a crosslinking agent, and a small amount of phosphorus acid was added as a catalyst to acidify the solution, pH was regulated to 3, stirred at 80 ˚C for 2 hours, and then the temperature was dropped to a room temperature.

Also, considering the properties of methyl cellulose, methyl cellulose was stirred at a room temperature for 24 hours.

The cross-linked polyvinyl alcohol solution was added with the prepared methyl cellulose solution and the mixture was poured onto the glass plate (400mmX400mmX5mm) and the thickness of the mixture was regulated with an appropriate device.

Since physical properties can vary according to drying time and temperature, PVA-5% MC film was prepared at 60 ˚C for 24 hours (see FIG. 1).

<Example 2> Preparation of PVA-15% MC film

A PVA-15% MC film was produced with a method similar to that of Example 1, except that 2.25g of methyl cellulose (15 weight%) was used instead of 0.75g of methyl cellulose (see FIG. 1).

<Example 3> Preparation of PVA-25% MC film

A PVA-25% MC film was produced with a method similar to that of Example 1, except that 3.75g of methyl cellulose (25 weight%) was used instead of 0.75g of methyl cellulose (see FIG. 1).

<Example 4> Preparation of PVA-50% MC film

A PVA-50% MC film was produced with a method similar to that of Example 1, except that 7.5g of methyl cellulose (50 weight%) was used instead of 0.75g of methyl cellulose (see FIG. 1).

<Experimental example 1> Measurement of mechanical characteristics according to the amount of methyl cellulose

To measure the mechanical characteristics according to the amount of methyl cellulose, the amount of methyl cellulose according to polyvinyl alcohol was changed from 0 to 100% to measure the tensile strength and modulus of elongation with identification number KSM3054 plastic film and the method of tensile test of sheet.

The experimental conditions are: temperature of 23±2 ˚C, relative humidity of 50±5%; and 5 or more specimens.

Specimen of each film was cut into 25mm in width, 120mm in length, and 80mm of clamp level, and the speed was controlled at 500mm/min by UTM (Shimadzu. Japan) loaded with N load cell, and the tensile strength of measured film was marked in $N/mm^2$. The results are listed in Table 1 below and FIG. 2.

Table 1

| Kinds of films | Tensile strength ($N/mm^2$) | | | Percentage of elongation (%) | | |
|---|---|---|---|---|---|---|
| | minimum | maximum | average | minimum | maximum | average |
| PVA film | 58.44 | 61.32 | 59.88 | 130.94 | 149.05 | 139.99 |
| + MC 1% | 45.66 | 67.14 | 53.41 | 103.35 | 165.09 | 123.38 |
| + MC 3% | 43.09 | 60.47 | 52.47 | 71.04 | 132.35 | 105.18 |
| + MC 5% | 34.12 | 49.24 | 41.68 | 59.09 | 125.04 | 92.06 |
| + MC 8% | 37.58 | 44.73 | 41.14 | 70.23 | 104.91 | 80.81 |
| + MC 10% | 37.36 | 44.25 | 40.76 | 92.67 | 121.27 | 109.53 |
| + MC 15% | 34.72 | 43.41 | 39.50 | 112.04 | 169.37 | 149.62 |
| + MC 20% | 29.25 | 33.33 | 31.96 | 103.87 | 134.06 | 122.86 |
| + MC 25% | 26.67 | 29.58 | 28.06 | 96.84 | 125.73 | 114.80 |

(continued)

| Kinds of films | Tensile strength (N/mm$^2$) | | | Percentage of elongation (%) | | |
|---|---|---|---|---|---|---|
| | minimum | maximum | average | minimum | maximum | average |
| + MC 30% | 21.65 | 25.51 | 23.78 | 54.51 | 114.76 | 85.08 |
| + MC 35% | 21.13 | 22.10 | 21.78 | 33.84 | 79.88 | 47.26 |
| + MC 40% | 19.27 | 20.42 | 19.96 | 33.06 | 39.50 | 36.19 |
| + MC 45% | 19.09 | 20.25 | 19.74 | 42.36 | 53.88 | 48.06 |
| + MC 50% | 17.62 | 21.74 | 19.42 | 30.81 | 61.92 | 46.95 |
| MC 100% | 12.24 | 17.74 | 15.44 | 21.21 | 34.24 | 26.42 |

As Table 1 above indicates, the tensile strength of PVA was 59.9N/mm$^2$ when MC was not added and 41.1N/mm$^2$ when 5% of MC was added (Example 1), 39.5N/mm$^2$ when 15% of MC was added (Example 2), 28.1N/mm$^2$ when 25% of MC was added (Example 3), 19.4N/mm$^2$ when 50% of MC was added (Example 4) and 15.4N/mm$^2$ when pure MC was used in the preparation of the film.

The above indicates that in PVA-MC film including 0~50% of methyl cellulose (MC) with respect to polyvinyl alcohol (PVA), the tensile strength decreases depending on the amount of MC as the amount of MC increases. <Experimental example 2> Determination of biodegradability of specimen using analysis of evolved carbon dioxide

To confirm the biodegradability of PVA-MC film in aerobic composting condition, KS M 3100-1: 2003 was applied (Determination of the ultimate aerobic biodegradability and disintegration of plastic materials under controlled composting conditions- Part 1: Analysis of evolved carbon dioxide by titration method), which is based on **ISO 14855** : 1999 Determination of the ultimate aerobic biodegradability and disintegration of plastic materials under controlled composting conditions-Method by analysis of evolved carbon dioxide). Accordingly, test was conducted by applying analysis of evolved carbon dioxide in aerobic composting, the degradability of specimen was measured by measuring the speed and conversion rate of carbon converted to carbon dioxide under the controlled conditions of temperature, entrained air, and humidity.

The above method is designed to measure aerobic biodegradability of organic compound plastic and degradability, by simulating the aerobic decomposing situation of organic ingredients from municipal solid waste (MSW).

The degradability of MC film and PVA film in a field in a decomposing condition was measured by biodegradability system (JSBDT-24, Korea Testing & Research Institute). Inoculum was a stablized compost which went through a perfect after-ripening and was made from municipal solid waste. The specimen was mixed with inoculums, fixed and put into composting bin. For 45 days, moisture content, temperature and oxygen were controlled at composting conditions.

Carbon dioxide, water, inorganic salt, or newly generated microorganisms are final biodegradable products generated from the specimen, and the amount of generated carbon dioxide was continuously or periodically measured. Biodegradability was measured based on the ratio between carbon dioxide generated in theory and carbon dioxide actually generated. Maximum amount of generated carbon dioxide in theory was calculated from the amount of the total organic carbon contents of the product.

Among microorganism-turned-carbon, the amount of carbon that was not emitted as carbon dioxide through metabolism was not included as the carbon dioxide to constitute biodegradability. Also, an experiment on the field was separately conducted for comparison with the actual degradability in the field.

A general conventional agricultural byproduct compost was used, and a hole 2cm in was prepared. The height of the compost was 10cm, and morphological status and thermal properties were examined for 45 days.

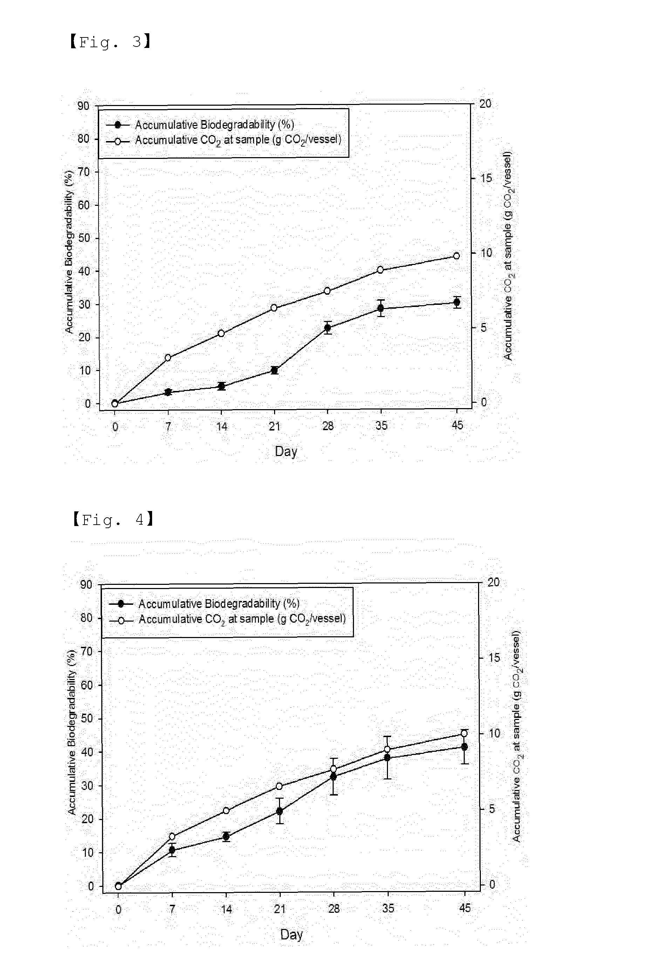

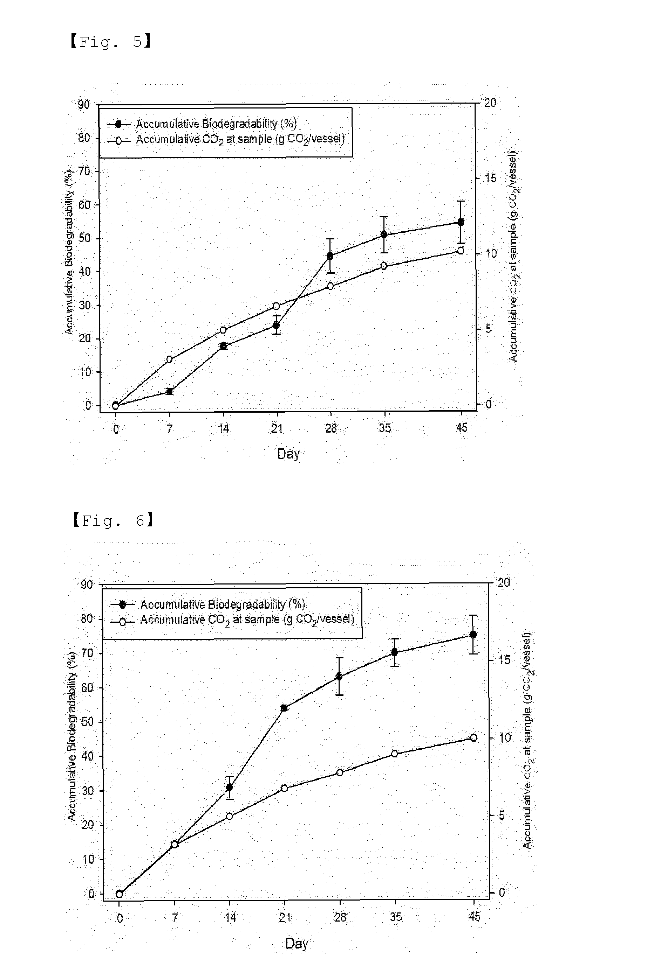

Table 2 and FIG. 3 illustrate the carbon dioxide emission from decomposing of PVA-5% MC film of Example 1 and biodegradability of PVA-5% MC film of Example 1, Table 3 and FIG. 4 illustrate the carbon dioxide emission and biodegradability of Example 2, Table 4 and FIG. 5 illustrate the carbon dioxide emission and biodegradability of Example 3, and Table 5 and FIG. 6 illustrate the carbon dioxide emission and biodegradability of Example 4. Under the aerobic composting condition, the accumulated amount of carbon dioxide generated in each test bottle and the accumulated biodegradability were calculated by mathematical formulas 1 and 2 below. The measuring result of biodegradability of specimen with the analysis of evolved carbon dioxide is illustrated in Table 6.

<Mathematical formula 1>

$$ThCO_2 = M_{TOT} \times C_{TOT} \times \frac{44}{12}$$

where, $M_{TOT}$ is total amount of dry content from specimen added to compost at the start of the experiment, $C_{TOT}$ is the ratio of organic carbon with respect to a total dry content of specimen, and 44 and 12 are the atomic weight of carbon dioxide and atomic weight of carbon respectively.

<Mathematical formula 2>

$$D_T = \frac{(CO_2)_T - (CO_2)_B}{ThCO_2} \times 100$$

where $(CO_2)_T$ is the accumulated amount (g) of carbon dioxide which was generated from composting vessel with specimen contained therein,
$(CO_2)_B$ is the average of the accumulated amount (g) of carbon dioxide which was generated from inoculum vessel, and
$ThCO_2$ is the theoretical amount (g) of carbon dioxide generated by specimen in the vessel in theory.

Table 2

| days | control group (g $CO_2$/ vessel) | accumulated $CO_2$ of specimen (g $CO_2$/vessel) | | | | accumulated biodegradability (%) | | | |
|---|---|---|---|---|---|---|---|---|---|
| | N=3 | 1 | 2 | 3 | average | 1 | 2 | 3 | average |
| 0 | 0.0 | 0.0 | 0.0 | 0.0 | 0.0 | 0.0 | 0.0 | 0.0 | 0.0 |
| 7 | 3.0 | 3.1 | 3.1 | 3.1 | 3.1 | 3.2 | 4.0 | 2.7 | 3.3 |
| 14 | 4.6 | 4.7 | 4.8 | 4.7 | 4.8 | 4.4 | 6.3 | 4.5 | 5.1 |
| 21 | 6.1 | 6.4 | 6.4 | 6.4 | 6.4 | 10.7 | 10.1 | 8.6 | 9.8 |
| 28 | 7.0 | 7.5 | 7.5 | 7.5 | 7.5 | 24.7 | 21.6 | 21.2 | 22.5 |
| 35 | 8.1 | 8.9 | 8.8 | 8.8 | 8.8 | 31.2 | 27.1 | 26.6 | 28.3 |
| 45 | 9.1 | 9.8 | 9.9 | 9.8 | 9.8 | 31.8 | 29.8 | 28.4 | 30.0 |

Table 3

| days | control group (g $CO_2$/ vessel) | accumulated $CO_2$ of specimen (g $CO_2$/vessel) | | | | accumulated biodegradability (%) | | | |
|---|---|---|---|---|---|---|---|---|---|
| | N=3 | 1 | 2 | 3 | average | 1 | 2 | 3 | average |
| 0 | 0.0 | 0.0 | 0.0 | 0.0 | 0.0 | 0.0 | 0.0 | 0.0 | 0.0 |
| 7 | 3.0 | 3.3 | 3.2 | 3.3 | 3.3 | 12.7 | 8.7 | 10.4 | 10.6 |
| 14 | 4.6 | 4.9 | 5.0 | 5.0 | 5.0 | 13.7 | 16.2 | 14.0 | 14.7 |
| 21 | 6.1 | 6.6 | 6.7 | 6.6 | 6.6 | 19.0 | 26.4 | 21.0 | 22.2 |
| 28 | 7.0 | 7.6 | 7.8 | 7.7 | 7.7 | 27.9 | 38.5 | 30.7 | 32.3 |
| 35 | 8.1 | 8.9 | 9.2 | 9.0 | 9.0 | 32.6 | 44.8 | 36.2 | 37.9 |

(continued)

| days | control group (g CO$_2$/vessel) | accumulated CO$_2$ of specimen (g CO$_2$/vessel) | | | | accumulated biodegradability (%) | | | |
|---|---|---|---|---|---|---|---|---|---|
| | N=3 | 1 | 2 | 3 | average | 1 | 2 | 3 | average |
| 45 | 9.1 | 9.9 | 10.1 | 10.0 | 10.0 | 37.9 | 46.9 | 38.9 | 41.0 |

Table 4

| days | control group (g CO$_2$/vessel) | accumulated CO$_2$ of specimen (g CO$_2$/vessel) | | | | accumulated biodegradability (%) | | | |
|---|---|---|---|---|---|---|---|---|---|
| | N=3 | 1 | 2 | 3 | average | 1 | 2 | 3 | average |
| 0 | 0.0 | 0.0 | 0.0 | 0.0 | 0.0 | 0.0 | 0.0 | 0.0 | 0.0 |
| 7 | 3.0 | 3.1 | 3.1 | 3.1 | 3.1 | 5.1 | 3.7 | 3.6 | 4.1 |
| 14 | 4.6 | 5.0 | 5.0 | 5.0 | 5.0 | 17.9 | 18.1 | 16.6 | 17.5 |
| 21 | 6.1 | 6.7 | 6.6 | 6.6 | 6.6 | 27.0 | 21.7 | 22.9 | 23.9 |
| 28 | 7.0 | 8.1 | 7.7 | 7.9 | 7.9 | 50.1 | 39.9 | 43.3 | 44.5 |
| 35 | 8.1 | 9.4 | 9.0 | 9.2 | 9.2 | 56.6 | 46.0 | 49.5 | 50.7 |
| 45 | 9.1 | 10.4 | 10.0 | 10.2 | 10.2 | 61.2 | 48.7 | 53.2 | 54.4 |

Table 5

| days | control group (g CO$_2$/vessel) | accumulated CO$_2$ of specimen (g CO$_2$/vessel) | | | | accumulated biodegradability (%) | | | |
|---|---|---|---|---|---|---|---|---|---|
| | N=3 | 1 | 2 | 3 | average | 1 | 2 | 3 | average |
| 0 | 0.0 | 0.0 | 0.0 | 0.0 | 0.0 | 0.0 | 0.0 | 0.0 | 0.0 |
| 7 | 3.0 | 3.2 | 3.2 | 3.2 | 3.2 | 13.9 | 15.0 | 14.4 | 14.4 |
| 14 | 4.6 | 5.0 | 5.1 | 5.0 | 5.0 | 27.7 | 34.2 | 30.2 | 30.7 |
| 21 | 6.1 | 6.8 | 6.9 | 6.8 | 6.8 | 54.2 | 54.3 | 53.2 | 53.9 |
| 28 | 7.0 | 7.8 | 7.8 | 7.7 | 7.8 | 69.3 | 59.2 | 60.5 | 63.0 |
| 35 | 8.1 | 9.1 | 9.0 | 9.0 | 9.0 | 74.5 | 67.9 | 67.3 | 69.9 |
| 45 | 9.1 | 10.1 | 10.0 | 10.0 | 10.0 | 81.4 | 71.3 | 72.1 | 74.9 |

Table 6

| | ThCO$_2$ (g CO$_2$/vessel) | Biodegradability (%) |
|---|---|---|
| control group N=3 (average) | 8.0910 | 73.5 |
| PVA-MC 5% film N=3 (average) (example 1) | 2.4967 | 30.0 |
| PVA-MC 15% film N=3 (average) (example 2) | 2.2830 | 41.0 |
| PVA-MC 25% film N=3 (average) (example 3) | 2.0557 | 54.4 |

(continued)

| | ThCO$_2$ (g CO$_2$/vessel) | Biodegradability (%) |
|---|---|---|
| PVA-MC 50% film N=3 (average) (example 4) | 1.2998 | 74.9 |

As listed in Table 6 above, after 45 days, degradability of cellulose without adding PVA is 73.5%, and degradability of PVA-MC 5% (Example 1) is 30%.

Also, PVA-MC 15% film (Example 2) is 41%, PVA-MC 25% film (Example 3) is 54.4%, and PVA-MC 50% film (Example 4) is 74.9%.

Also, the degradability of specimen of PVA-MC 50% film was almost similar to or higher than degradability of cellulose without PVA within the margin of error.

Therefore, since PVA and cellulose mixed polymer film have degradability similar to or higher than film containing cellulose only. Since it is possible to regulate the degradability, the PVA and cellulose mixed polymer film according to an embodiment of the present invention can be effectively used as a biodegradable polymer for agricultural films or films for domestic use, or for vinyl industry or household waste processing industry.

<Example 3> Degradability of PVA-MC film in soil

Measurement of biodegradability by using analysis of evolved carbon dioxide can be confirmed by figures, but the specimen should be completely decomposed in order to do so. Since morphological decomposting in a field is generally regarded as decomposition, a field test was conducted to measure the degradability.

A general conventional agricultural byproduct compost was used, and a hole 2cm in depth was prepared. Two types of experiments were conducted in which 1) landfill film buried with compost 10cnm in height, and 2) mulching film exposed on the surface of a field.

To minimize the adsorption of soil, 1mm x 1mm of mosquito net was covered upside and downside and morphological status was examined with bare eyes and analyzed with SEM.

Conventionally, it was reported that PVA with 98% or higher degree of saponification showed 8~9% of biodegradability after 74 days, but biodegradability of cellulose under composting condition was about 50~75% after 28 days from the beginning of the experiment.

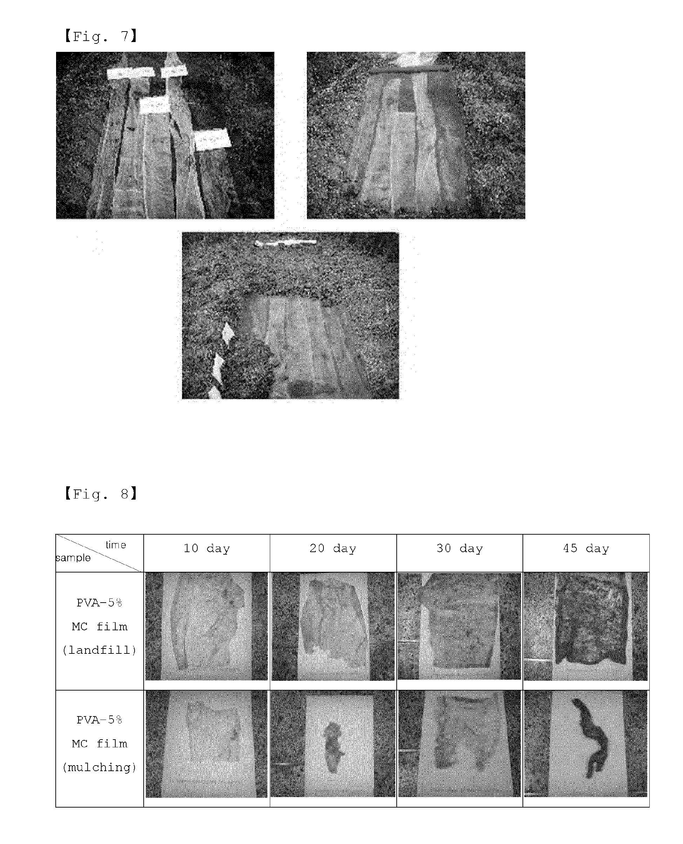

However, it was possible to confirm with bare eyes that the PVA-MC mixed polymer film of Example 4 had already decomposed approximately 50% or more after 45 days (see FIGS. 8~11).

Also, by the SEM, it was confirmed that meticulous air cells appeared on Day 10. Compared to PVA-5% MC film of Example 1, the PVA-50% MC film of Example 4 showed air cells in increased size and number.

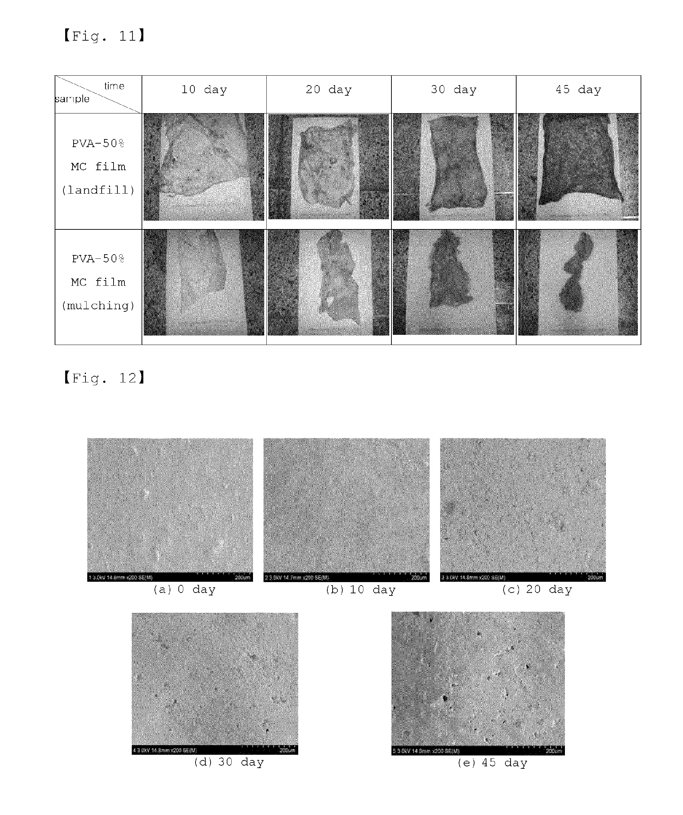

Further, although PVA-MC polymer films of Examples 1 to 4 looked as if the films contracted greatly in case of mulching, by the SEM analysis, landfill and mulching did not show much difference (see FIGS. 12~19).

Therefore, PVA-MC mixed polymer film according to an embodiment of the present invention can be effectively used as a biodegradable polymer film with controlled degradability, for films for agricultural or domestic use, or for vinyl industry or household waste processing industry.

<Example 4> Thermal behavior of PVA-MC mixed polymer film

Thermal behavior, thermal stability and miscibility of PVA-MC polymer film discomposed in Example 3 were examined by using Differential Scanning Calorimetry (DSC).

Table 7 illustrates the thermal properties of soil degradability of PVA-MC films containing different PVA and MC contents, respectively.

Table 7

| DSC heat behavior | | Landfill | | | Mulching | | |
|---|---|---|---|---|---|---|---|
| | | Tg(˚C) | Tm(˚C) | $H_{Tm}$(J/g) | Tg(˚C) | Tm(˚C) | $H_{Tm}$(J/g) |
| MC 5% | D-10 | 76.23 | 209.17 | 40.57 | 77.96 | 201.67 | 36.24 |
| | D-20 | 77.15 | 218.00 | 47.12 | 76.03 | 214.67 | 43.19 |
| | D-30 | 77.82 | 218.00 | 47.14 | 76.53 | 214.67 | 44.53 |
| | D-45 | 76.52 | 220.50 | 50.76 | 80.11 | 221.50 | 42.33 |
| MC 15% | D-10 | 75.98 | 212.83 | 41.55 | 80.90 | 161.50 | 17.07 |
| | D-20 | 74.48 | 216.17 | 45.98 | 79.35 | 215.83 | 46.61 |
| | D-30 | 76.71 | 219.33 | 45.73 | 75.86 | 220.50 | 43.73 |
| | D-45 | 76.52 | 220.50 | 47.61 | 81.43 | 222.67 | 45.98 |
| MC 25% | D-10 | 75.85 | 217.50 | 43.84 | 78.65 | 191.83 | 28.18 |
| | D-20 | 77.10 | 220.17 | 43.93 | 77.40 | 216.67 | 44.92 |
| | D-30 | 77.38 | 220.00 | 44.91 | 76.98 | 221.50 | 50.27 |
| | D-45 | 80.15 | 222.50 | 42.37 | 78.58 | 219.67 | 45.62 |
| MC 50% | D-10 | 74.30 | 217.00 | 42.10 | 76.59 | 213.50 | 39.90 |
| | D-20 | 75.00 | 218.50 | 42.80 | 77.74 | 212.83 | 36.06 |
| | D-30 | 79.14 | 220.67 | 40.40 | 76.66 | 219.50 | 46.14 |
| | D-45 | 76.74 | 222.67 | 50.62 | 77.16 | 219.50 | 40.60 |

As listed in Table 7, as the amount of MC increases about 5~50% in the PVA-MC mixed polymer film according to Examples 1 to 4, melting point ($T_m$) is decreased, while the melting point of pure PVA was 230 ˚C, and the melting point of pure PVA film was 217.9 ˚C.

Further, DSC analysis of collected film was analyzed, and it turned out that as the decomposition proceeds, $T_m$ of pure PVA hovers around 220 ˚C.

Therefore, the polymer film including a mixture of polyvinyl alcohol and methyl cellulose according to an embodiment of the present invention can be effectively used as a biodegradable polymer film with controlled degradability, for films for agricultural or domestic use, or for vinyl industry or household waste processing industry.

<Example 5> Preparation of PVA-MC with plant protection agent added thereto

To prepare a PVA-MC film with plant protection agent added thereto, 85g of water was added to 15g of PVA to dissolve PVA, the mixture was stirred at 80 ˚C for 2 hours, and during stirring, 3g of polyethyleneglycol-400 (PEG-400) was added, and stirred at 80 ˚C for 2 more hours.

After that, 1.2g of glyoxal, which is cross-linking agent, was added to such prepared polyvinyl alcohol solution, and a small amount of phosphorus acid was added as a catalyst to acidify the solution, and pH was as adjusted to 3, the mixture was stirred at 80 ˚C for 2 hours, and the temperature was dropped to a room temperature.

Also, considering the properties of methyl cellulose, methyl cellulose was stirred at a room temperature for 24 hours.

Such cross-linked polyvinyl alcohol was mixed with the methyl cellulose solution, stirred, and neem oil or a plant protection agent, was added and the mixture was stirred for 2 hours.

The homogenized solution was stabilized to prevent formation of air cell, poured onto glass plate (400mm × 400mm × 5mm) which have even surface, and the thickness of the solution was adjusted to a constant value with an appropriate device.

Such prepared film was dried at 60 ˚C for 24 hours, and PVA-MC film with plant protection agent added thereto was prepared.

**Claims**

1.  A biodegradable polymer film with controlled biodegradability comprising a mixture of polyvinyl alcohol (PVA) and cellulose polymer.

2.  The biodegradable polymer film of claim 1, wherein the polyvinyl alcohol is used by 10~90 weight% with respect to the total film weight, and 1~99 weight% of the cellulose polymer is mixed with respect to the weight of polyvinyl alcohol.

3.  The biodegradable polymer film of claim 1 or 2, wherein the cellulose polymer is one selected from a group consisting of methyl cellulose, ethyl cellulose, carboxyl methyl cellulose, cellulose acetate phthalate and stearyl cellulose.

4.  The biodegradable polymer film of claim 3, wherein the cellulose polymer is methyl cellulose.

5.  A preparation method of a biodegradable polymer film with controlled biodegradability, which includes;
    dissolving polyvinyl alcohol in water, adding polyethyleneglycol-400 (PEG-400), and adding glyoxal and phosphoric acid into the above mixture (step 1);
    adding a cellulose polymer dissolved in water to the mixture prepared at step 1 (step 2);
    preparing a film with the mixture prepared at step 2 on a glass plate (step 3); and
    drying the film prepared at step 3 (step 4).

6.  The preparation method of claim 5, wherein the polyvinyl alcohol is used by 10~90 weight% with respect to the total film weight, and 1~99 weight% of the cellulose polymer is used with respect to the weight of polyvinyl alcohol.

7.  The preparation method of claim 5 or 6, wherein the cellulose polymer is one selected from a group consisting of methyl cellulose, ethyl cellulose, carboxyl methyl cellulose, cellulose acetate phthalate and stearyl cellulose.

8.  The preparation method of claim 7, wherein the cellulose polymer is methyl cellulose.

9.  The preparation method of any of claims 5 to 8, wherein the polyethyleneglycol-400 (PEG-400) is used by 50 weight% or below, or preferably, by 15-20 weight%, to the weight of polyvinyl alcohol.

10. The preparation method of any of claims 5 to 9, wherein the glyoxal is used by 30 weight% or below, or preferably, by 5-15 weight%, to The weight of PVA is added.

11. The biodegradable polymer film of any of claim 1 to 4, wherein the biodegradable polymer film comprises a plant protection agent.

12. The mixed biodegradable polymer film of claim 11, wherein the plant protection agent is use one selected from a group consisting of neem oil, rotenone, poroligenous liquor, nicotine or arsenic acid.

13. A mulching film for agricultural use comprising the biodegradable polymer film of any of claims 1 to 4, 11 or 12.

【Fig. 1】

【Fig. 2】

【Fig. 3】

【Fig. 4】

【Fig. 5】

【Fig. 6】

【Fig. 7】

【Fig. 8】

| time sample | 10 day | 20 day | 30 day | 45 day |
|---|---|---|---|---|
| PVA-5% MC film (landfill) | | | | |
| PVA-5% MC film (mulching) | | | | |

【Fig. 9】

| time<br>sample | 10 day | 20 day | 30 day | 45 day |
|---|---|---|---|---|
| PVA-15%<br>MC film<br>(landfill) | | | | |
| PVA-15%<br>MC film<br>(mulching) | | | | |

【Fig. 10】

| time<br>sample | 10 day | 20 day | 30 day | 45 day |
|---|---|---|---|---|
| PVA-25%<br>MC film<br>(landfill) | | | | |
| PVA-25%<br>MC film<br>(mulching) | | | | |

【Fig. 11】

| time<br>sample | 10 day | 20 day | 30 day | 45 day |
|---|---|---|---|---|
| PVA-50%<br>MC film<br>(landfill) | | | | |
| PVA-50%<br>MC film<br>(mulching) | | | | |

【Fig. 12】

(a) 0 day  (b) 10 day  (c) 20 day

(d) 30 day  (e) 45 day

【Fig. 13】

(a) 0 day        (b) 10 day        (c) 20 day

(d) 30 day              (e) 45 day

【Fig. 14】

(a) 0 day        (b) 10 day        (c) 20 day

(d) 30 day              (e) 45 day

【Fig. 15】

(a) 0 day  (b) 10 day  (c) 20 day

(d) 30 day  (e) 45 day

【Fig. 16】

(a) 0 day  (b) 10 day  (c) 20 day

(d) 30 day  (e) 45 day

【Fig. 17】

(a) 0 day  (b) 10 day  (c) 20 day

(d) 30 day  (e) 45 day

【Fig. 18】

(a) 0 day  (b) 10 day  (c) 20 day

(d) 30 day  (e) 45 day

【Fig. 19】

(a) 0 day    (b) 10 day    (c) 20 day

(d) 30 day    (e) 45 day

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 100440742 B1

### Non-patent literature cited in the description

- **I. SAKURADA ; MARCEL DEKKER.** C.A. Finch. John Wiley & Sons, 1985
- **M. TSUKADA et al.** *J. Polym. Sci., Part B, Polym. Phys. Ed.,* 1994, vol. 32, 243
- **C. M. HASSAN et al.** *J. Appl. Polym. Sci.,* 2000, vol. 76, 2075
- **J. H. KIM et al.** *J. Appl . Polym. Sci.,* 1992, vol. 44, 1823
- **T. CHANDY et al.** *J. Appl . Polym. Sci.,* 1992, vol. 44, 2145
- **Y. AZUMA et al.** *Polymer,* 1992, vol. 33, 4763
- **BREITENBACH, A. et al.** *Polymer,* 1998, vol. 39, 3261
- **KOYANO T et al.** *J. Biomed. Mat. Res.,* 1996, vol. 39, 486
- **SEOK KYUN NOH et al.** *Kor, J, Polymer Science and Technology,* 2004, vol. 15, 4-11
- **A. USUKI.** *J. appl. Polym. Sci.,* 1997, vol. 63, 137
- **M. KATO.** *J. Appl. Polym. Sci.,* 1997, vol. 66, 1781
- **X. ZHENG.** *Polym. Derad. Stab.,* 2003, vol. 82, 441
- **ALBERTSSON, A. C.** *Polymer Deg. and Stabil.,* 1992, vol. 37, 163-168
- **LEE, S. I.** *J. Int. of Industrial Technol.,* 2001, vol. 29, 129-134
- **WHITEHOUSE, A.B.** *Pollution Engineering,* May 1990, 71
- **TAO, B.Y.** *ASAE Paper,* 1990, 906609